# FASCICULE DE BREVET EUROPEEN

(11) **EP 3 094 658 B1**
(45) Date de publication et mention de la délivrance du brevet: **19.03.2025**
(21) Numéro de dépôt: 15705638.3
(22) Date de dépôt: 15.01.2015
(51) Int. Cl.: C08F 8/00, C08F 8/44, C08F 20/54, C08F 20/44, D21H 17/34, D21H 21/06, C08F 220/56, C08F 226/02, C08F 222/38, D21H 17/45, D21H 21/10, D21H 21/18

(54) **SOLUTION AQUEUSE DE COPOLYMERES CATIONIQUES DERIVES D'ACRYLAMIDE, PROCEDE DE PREPARATION ET UTILISATION**
WÄSSRIGE LÖSUNG VON KATIONISCHEN COPOLYMEREN AUS ACRYLAMID, HERSTELLUNGSVERFAHREN UND VERWENDUNG
AQUEOUS SOLUTION OF CATIONIC COPOLYMERS DERIVED FROM ACRYLAMIDE, PREPARATION METHOD AND USE

(30) Priorité: 15.01.2014 FR 1450301
(43) Date de publication de la demande: 23.11.2016
(73) Titulaire: SNF Group, 42160 Andrézieux-Bouthéon (FR)
(72) Inventeur: HUND, René, F-42390 Villars (FR); AURIANT, Christophe, F-42000 Saint-etienne (FR); MIALON, Laurent, F-42330 Saint-Galmier (FR)
(74) Mandataire: Cabinet Laurent & Charras
(86) Numéro de dépôt international: PCT/FR2015/050100
(87) Numéro de publication internationale: WO 2015/107302

(56) Documents cités:
- WO-A1-2011/015783
- WO-A1-2014/029593
- US-A- 3 619 358

## Description

L'invention concerne une solution aqueuse de (co)polymères cationiques ou amphotères, obtenus par dégradation dite d'Hofmann effectuée sur un (co)polymère base d'au moins un monomère non ionique choisi dans le groupe comprenant l'acrylamide, le méthacrylamide, le N,N diméthylacrylamide, et l'acrylonitrile. Le procédé de préparation de cette solution polymérique est caractérisé en ce qu'on effectue un post-traitement spécifique sur la solution de (co)polymères obtenus à l'issue de la dégradation d'Hofmann.

L'invention concerne également l'utilisation de cette solution de (co)polymères comme additif dans un procédé de fabrication de papier, de cartons ou analogues, et plus particulièrement comme agents de floculation, rétention et/ou drainage, et résistance à sec.

### La dégradation d'Hofmann

Cette réaction découverte par Hofmann à la fin du dix-neuvième siècle, permet de convertir une fonction amide en fonction amine primaire possédant un atome de carbone en moins. Le mécanisme réactionnel est détaillé ci-dessous.

En présence d'une base (soude), un proton est arraché à l'amide.

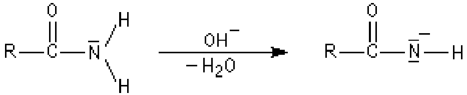

L'ion amidate formé réagit alors avec le chlore actif (Cl₂) de l'hypochlorite (e.g. : NaClO qui est en équilibre : 2 NaOH + Cl₂ ⇔ NaClO + NaCl + H₂O) pour donner un N-chloramide. La base (NaOH) arrache un proton du chloramide pour former un anion. L'anion perd un ion chlorure pour former un nitrène qui subit une transposition en isocyanate.

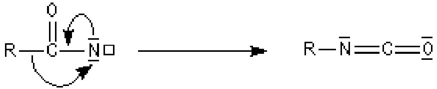

Par réaction entre l'ion hydroxyde et l'isocyanate, un carbamate est formé.

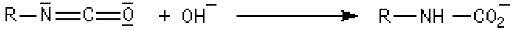

Après décarboxylation (élimination de CO₂) à partir du carbamate, on obtient une amine primaire

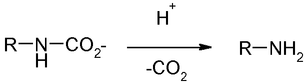

Pour la conversion de tout ou partie des fonctions amide d'un (co)polymère comprenant un groupement amide en fonction amine, 2 facteurs principaux interviennent (exprimés en rapports molaires). Il s'agit de :
- Alpha = (hypohalogénure d'alcalin et/ou alcalino terreux / groupement amide) et
- Beta = (hydroxyde d'alcalin et/ou alcalino terreux / hypohalogénure d'alcalin et/ou alcalino terreux).

Bien que la dégradation d'Hofmann porte initialement sur les groupements amide, elle peut également concerner les fonctions nitrile (-C≡N), et notamment celles des (co)polymères d'acrylonitrile.

Les polymères obtenus par réaction de dégradation d'Hofmann sont notamment utilisés dans les procédés de fabrication de papier. De manière générale, l'efficacité de ces polymères en tant qu'agents de résistance, augmente avec leur cationicité. En d'autres termes, afin d'augmenter leur cationicité, les (co)polymères mis en œuvre présentent un degré de dégradation élevé. En effet, en fonction du degré Alpha de dégradation, il est possible de générer des variations de cationicité liées à la quantité de fonctions amine produites sur le squelette carboné du (co)polymère. Par ailleurs, il est admis que lorsque le produit obtenu par réaction de dégradation d'Hofmann est amphotère, celui-ci peut également être utilisé pour améliorer la rétention de charges lors du procédé de fabrication du papier ou carton, tout en maintenant les performances de résistance à sec.

La cationicité du (co)polymère dégradé peut notamment provenir de groupements amine formés qui peuvent être protonés, mais aussi de la présence éventuelle d'un monomère cationique.

Jusqu'à récemment, seuls des procédés très lourds mettant en œuvre, in situ, une unité de fabrication de produit de dégradation d'Hofmann (EP 377313) ou des procédés mettant en œuvre un autre polymère (base de type (co)polymère de N-vinylformamide suivie d'une hydrolyse) lui-même relativement coûteux (US 2004/118540), avaient été mis en place.

La première solution industrielle viable a été proposée début 2005 dans le document WO2006075115 de la Demanderesse. Dans ce document, le produit de dégradation d'Hofmann décrit est un polymère organique produit à une concentration supérieure à 3.5% en poids. Même si les polymères décrits dans ce document permettent de fortement améliorer les performances de résistance à sec, ils présentent un poids moléculaire très faible conférant à ces (co)polymères un intérêt très limité pour des applications telles que le drainage ou la floculation.

Les documents US 3,619,358, WO 2011/015783 et WO 2014/029593 décrivent un procédé de fabrication du papier mettant en œuvre du polyacrylamide modifié par la dégradation d'Hofmann.

Les documents WO2008/107620 et WO/2010/061082 de la Demanderesse avaient permis de résoudre en partie cette problématique de faibles performances en égouttage. Cependant, les polymères décrits dans ces documents présentent un certain plafonnement des performances relatives à l'égouttage et à la rétention.

Le document WO 2009/013423 de la Demanderesse avait aussi permis d'augmenter les performances d'égouttage en proposant un post-traitement d'un (co)polymère issu de la réaction d'Hofmann. Ce post-traitement consiste en une post-ramification effectuée sur le copolymère obtenu par dégradation Hofmann en présence d'au moins un agent de ramification polyfonctionnel. Cependant, ce procédé présentait de très fortes limites avec un contrôle très complexe de la post-ramification (industrialisation délicate), ainsi que des performances elles aussi saturées pour des dosages supérieurs à 1.5kg actif/tonne de papier.

Le document WO 2011/015783 de la Demanderesse propose de nouveaux polymères ayant permis de repousser les limites de saturation en performances, notamment pour des forts dosages, de l'ordre de 2kg actif/tonne.

Le problème que se propose de résoudre l'invention est donc de mettre au point des polymères dont les propriétés d'égouttage puissent être encore améliorées par rapport aux polymères de l'art antérieur, sans pour autant engendrer de pertes de propriétés physiques.

En outre, la présente invention permet d'atteindre, et voire surpasser, les propriétés des polymères de l'art antérieur, à dosage égal ou inférieur.

### Description de l'invention

La Demanderesse a trouvé et mis au point de nouveaux polymères solubles dans l'eau présentant des propriétés d'égouttage améliorées, lesdits polymères pouvant être obtenus par une alcalinisation suivie d'une acidification d'un copolymère cationique ou amphotère, obtenu par dégradation Hofmann.

La Demanderesse a constaté, de manière surprenante et inattendue, que le traitement ainsi effectué permet de conférer à un polymère cationique ou amphotère obtenu par dégradation d'Hofmann une amélioration des performances d'égouttage par rapport au même polymère non traité.

En d'autres termes, l'invention a pour objet un procédé de préparation d'une solution polymérique aqueuse de viscosité V3 contenant au moins un (co)polymère cationique ou amphotère, comprenant les étapes suivantes :
- réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base d'au moins un monomère non ionique choisi dans le groupe comprenant l'acrylamide, le méthacrylamide, le N,N diméthylacrylamide, et l'acrylonitrile ;
- obtention d'une solution polymérique aqueuse contenant au moins un (co)polymère cationique ou amphotère issu de la réaction de dégradation d'Hofmann ;
- post-traitement de la solution polymérique aqueuse résultante de viscosité V1;
***caractérisé*** en ce que le post-traitement comprend les étapes successives suivantes :
a) on ajuste le pH de la solution polymérique aqueuse à une valeur supérieure ou égale à 5.5 ;
b) on abaisse le pH de la solution polymérique aqueuse à une valeur comprise entre 2 et 5.

Dans l'étape a) de ce procédé,
- on mesure la viscosité V1 de la solution polymérique aqueuse ; puis
- on ajuste le pH de la solution polymérique aqueuse à une valeur supérieure ou égale à 5.5 et on augmente la viscosité V1 de de la solution polymérique aqueuse jusqu'à une valeur V2 correspondant à au moins 1.5 fois la valeur V1 tout en étant inférieure à 100 000 mPa.s (100,000 cps).

De manière avantageuse, dans l'étape b), on ajuste le pH entre 2 et 5, et on diminue la viscosité de la solution polymérique aqueuse à une valeur V3, supérieure à V1 et inférieure à V2.

Par « solution aqueuse polymérique résultante », on entend la solution polymérique obtenue à l'issue de la réaction de dégradation d'Hofmann. Cette solution comprend le ou les (co)polymères dégradés par la réaction d'Hofmann.

Autrement dit, la réaction de dégradation d'Hofmann est terminée avant que ne soit effectué le post-traitement selon l'invention. Une réaction terminée signifie que la réaction est arrivée à son terme, autrement dit que toutes les réactions devant avoir lieu dans les conditions de réactions ont eu lieu. Cela ne signifie pas nécessairement que la réaction est complète. La réaction est soit terminée et complète, soit terminée et partielle. Une réaction terminée et complète signifie que toutes les fonctions amides ont été transformées en fonction amine, et cela correspond à un facteur alpha égal à 1. Dans ce cas, la solution polymérique aqueuse post-traitée comprend le (co)polymère base totalement dégradé. Une réaction terminée et partielle signifie qu'au terme de la réaction, une partie seulement des fonctions amides a été transformée en fonctions amine, et cela correspond à un facteur alpha inférieur à 1, dit alpha partiel. Dans ce cas, le facteur alpha est préférentiellement supérieur à 0.5 et strictement inférieur à 1. Dans ce cas également, la solution polymérique aqueuse post-traitée comprend le (co)polymère base partiellement dégradé.

En outre, et selon un mode de réalisation particulier, la solution aqueuse polymérique résultante peut être concentrée ou diluée avant les étapes de post-traitement.

La dégradation d'Hofmann peut être réalisée sur au moins un (co)polymère base.

De manière générale, la viscosité est exprimée en centipoises (cps cP) ou en millipascal.seconde (mPa.s), 1 cP étant égale à 1 mPa.s.

Les viscosités sont mesurées avec un viscosimètre Brookfield, à 25°C avec un module LV.

Dans la présente demande, on considère que l'homme de l'art est en mesure de déterminer le module et la vitesse (viscosimètre Brookfield, module LV) adaptés selon la gamme de viscosité à mesurer. Ce type de mesures fait en effet partie des connaissances générales de l'homme du métier.

Le module du viscosimètre est adapté en fonction de la viscosité mesurée, cette étape faisant partie des opérations de routine auxquelles fait face l'homme du métier lorsqu'il veut mesurer la viscosité d'une solution. A titre indicatif, le tableau ci-dessous précise quel module utiliser en fonction de la viscosité de la solution à 25°C :

| Module LV | LV1 | LV1 | LV2 | LV2 |
|---|---|---|---|---|
| Viscosité (mPa.s) | 0-100 | 0-200 | 100-400 | 200-800 |
| Vitesse du module (rpm) | 60 | 30 | 60 | 30 |

| Module LV | LV3 | LV3 | LV3 | LV4 | LV4 | LV4 |
|---|---|---|---|---|---|---|
| Viscosité (mPa.s) | 400-1600 | 600-3200 | 2K-8K | 2K-8K | 4K-20K | 20K-200K |
| Vitesse du module (rpm) | 60 | 30 | 12 | 60 | 30 | 12 |

| | | | | | | |
|---|---|---|---|---|---|---|
| Ces données correspondent à un VISCOSIMÈTRE DIAL READING équipé d'un module LV 1K = 1000 1 rpm = 1 tour par minute | | | | | | |

A titre indicatif, un module LV-3 est particulièrement adapté pour mesurer une viscosité de 5,000 mPa.s, notamment à une vitesse de 12 rpm et à une température de 25°C. Ces conditions sont particulièrement adaptées pour une concentration en polymère issu de la réaction de dégradation d'Hofmann de l'ordre de 7% en poids, par rapport au poids de la solution aqueuse mise en œuvre.

Quoi qu'il en soit, la concentration en polymère issu de la réaction de dégradation d'Hofmann n'est pas déterminante pour mesurer la viscosité. En effet, cette concentration varie au cours de l'avancement du procédé en raison des étapes d'ajustement du pH. La mesure de la viscosité de la solution polymérique ne nécessite pas une concentration fixe en polymère.

Comme déjà dit, dans l'étape a) de post-traitement, le pH de la solution polymérique est ajusté à une valeur supérieure ou égale à 5.5. Selon un mode de réalisation particulier, le pH est de préférence compris entre 5.5 et 12, et plus préférentiellement compris entre 5.5 et 10, et encore plus préférentiellement entre 5.5 et 8.

S'agissant de la viscosité V2, elle est inférieure à 100 000 mPa.s (100 000 cps), préférentiellement inférieure à 50 000 mPa.s (50 000 cps), et encore plus préférentiellement inférieure à 30 000 mPa.s (30 000 cps). En outre la viscosité V2 est avantageusement supérieure ou égale à 2 fois la viscosité V1. La viscosité V2 est préférentiellement supérieure à 2000 mPa.s, plus préférentiellement supérieure à 3000 mPa.s.

Dans l'étape b) du post-traitement, le pH de la solution polymérique est abaissé à une valeur comprise entre 2 et 5, préférentiellement comprise entre 2 et 4, et encore plus préférentiellement comprise entre 3 et 4.

Le post-traitement selon l'invention est préférentiellement effectué sur la solution aqueuse polymérique directement obtenue à l'issue de la dégradation d'Hofmann. Comme déjà indiqué, la solution polymérique obtenue à l'issue de la dégradation d'Hofmann peut également être diluée ou concentrée avant que le post-traitement selon l'invention soit effectué.

La concentration de la solution polymérique aqueuse sur laquelle le post-traitement selon l'invention est effectué est avantageusement comprise entre 0.5% et 50% en poids de (co)polymère (issu de la la dégradation d'Hofmann totalement ou partiellement dégradé) par rapport au poids de ladite solution polymérique, plus préférentiellement entre 2 et 30%, en encore plus préférentiellement entre 7 et 20%. Il s'agit de la concentration en (co)polymères issus de la dégradation d'Hofmann d'un (co)polymère base, préalablement au post-traitement.

La viscosité V1 de la solution polymérique sur laquelle le post-traitement selon l'invention est effectué est avantageusement comprise entre 10 mPa.s (10 cps) et 5000 mPa.s (5000 cps) (Brookfield à 25°C et un module LV), et encore plus préférentiellement comprise entre 50 et 500 mPa.s (50 à 500 cps).

Selon un mode de réalisation particulier, le post-traitement selon l'invention est effectué sur une solution polymérique contenant comme polymère, uniquement les polymères directement issus de la dégradation d'Hofmann. En d'autres termes, et selon ce mode de réalisation particulier, la solution aqueuse polymérique post-traitée ne contient que des (co)polymères issus de la dégradation d'Hofmann d'un (co)polymère base tel que décrit ci-avant.

Selon un autre mode de réalisation, le procédé selon l'invention met en œuvre au moins deux (co)polymères base. Dans ce cas, la solution polymérique aqueuse post-traitée comprend des (co)polymères issus de la dégradation d'Hofmann des deux (co)polymères base.

Les étapes de post-traitement sont généralement réalisées à une température comprise entre 5 et 50°C, de préférence entre 10 et 30°C.

Généralement le pH de la solution polymérique directement obtenue à l'issue de la dégradation d'Hofmann est compris entre 2 et 5, et plus généralement entre 3 et 4. Cela correspond à la gamme de pH dans laquelle un (co)polymère issu d'une dégradation dite d'Hofmann présente une stabilité de ses performances dans le temps. De manière générale, l'ajustement du pH lors de l'étape a) du procédé consiste donc à augmenter le pH à une valeur supérieure ou égale à 5.5.

Le post-traitement selon l'invention est réalisé sur une solution polymérique ayant un pH avantageusement compris entre 2 et 5 et plus préférentiellement entre 2.5 et 4.5, et très préférentiellement entre 3 et 4.

La Demanderesse a constaté que l'ajustement du pH à une valeur supérieure ou égale à 5.5 d'une solution aqueuse polymérique contenant un (co)polymère cationique ou amphotère obtenu par réaction de dégradation dite d'Hofmann entraînait une hausse progressive de la viscosité de celle-ci, cette augmentation de viscosité pouvant être interrompue à tout moment par un retour au pH initial.

Cette augmentation de viscosité permet, de manière surprenante et inattendue, de conférer au polymère cationique ou amphotère final des propriétés de performances d'égouttage significativement améliorées par rapport aux mêmes polymères n'ayant pas subi le post-traitement, c'est-à-dire par rapport aux polymères d'Hofmann de l'art antérieur.

Sans pour autant se limiter à une quelconque théorie, la Demanderesse considère que cette augmentation de viscosité pourrait être liée à une augmentation de poids moléculaire et/ou une réaction de ramification. Dans ce cas, et au contraire de l'art antérieur, cette ramification ne serait pas liée à l'addition d'un composé polyfonctionnel.

La première étape du post-traitement selon l'invention consiste à ajuster le pH d'une solution polymérique contenant les polymères obtenus à l'issue de ladite dégradation d'Hofmann, à un pH supérieur ou égale à 5.5, préférentiellement compris entre 5.5 et 12, permettant ainsi l'augmentation de la viscosité de ladite solution. A cet effet toute base ou produit basique peut être utilisé. On peut citer par exemple les hydroxydes d'alcalin comme la soude, les hydroxydes d'alcalino-terreux comme l'hydroxyde de calcium, ou d'autres bases comme l'ammoniac, et la chaux vive. De manière préférée, l'hydroxyde de sodium est utilisé, préférentiellement dilué dans une solution aqueuse présentant une concentration généralement inférieure à 10 mol/litre.

L'ajustement du pH par ajout de base pourra se faire en une fois ou plusieurs fois, en coulée continue ou en ajout complet et rapide. La quantité de base et la manière d'incorporer la base seront facilement déterminées par l'homme de l'art de manière à ajuster le pH de la solution au pH désiré. L'ajout est préférentiellement effectué sous agitation mécanique de la solution polymérique aqueuse.

La vitesse de cette hausse en viscosité dépend grandement du pH, avec une accélération de la cinétique lorsque le pH est compris entre 7 et 9, voire entre 8 et 9. Au-delà de pH=10, la cinétique a tendance à diminuer.

Cette étape du post-traitement selon l'invention consiste également à laisser réagir le mélange ainsi effectué pendant un temps dit de maturation de manière à ce que la viscosité V2 de la solution polymérique aqueuse augmente d'au moins 50% par rapport à V1, de préférence d'au moins 100%, et à ce que la viscosité de la solution polymérique ne soit pas trop élevée.

En effet, une viscosité V2 trop élevée pourrait entraîner une difficulté à manipuler la solution et à effectuer l'étape d'acidification suivante. C'est la raison pour laquelle la viscosité V2 maximum est inférieure à 100 000 cps, préférentiellement inférieure à 50 000 cps, et très préférentiellement inférieure à 30 000 cps.

Lors de cette étape, l'augmentation de la viscosité V2 peut être contrôlée grâce à des mesures régulières de viscosité à l'aide d'un viscosimètre Brookfield à 25°C.

Le temps nécessaire pour atteindre la viscosité V2 peut varier selon différents paramètres. Il est avantageusement compris entre 5 minutes et 100 heures, et encore plus préférentiellement entre 30 minutes et 10 heures.

Comme pour toute réaction chimique, divers facteurs pourront être modifiés afin d'accélérer ou ralentir la cinétique de prise en viscosité, comme par exemple la température, la dilution du mélange, l'incorporation de sels, etc...

Lors de cette étape d'augmentation de la viscosité V1 jusqu'à la valeur V2, le mélange est préférentiellement sous agitation mécanique.

La deuxième étape du post-traitement consiste, à l'issue de l'obtention de la viscosité V2, à diminuer le pH de la solution polymérique à un pH compris entre 2 et 5, préférentiellement inférieur à 4 et très préférentiellement compris entre 3 et 4.

Cette étape permet de stopper la réaction non connue qui s'opère lors de l'ajout de la base sur le copolymère base et qui se traduit par la montée en viscosité. Sans être lié à une quelconque théorie, il pourrait s'agir d'une trans-amidation.

Comme déjà indiqué, la viscosité finale V3 de la solution polymérique obtenue à l'issue de la deuxième étape du post-traitement est avantageusement supérieure à V1 et inférieure à V2. Elle est avantageusement supérieure à 150 mPa.s (150 cps) (Brookfield, 25°C) lorsque la concentration en (co)polymère est de 8% en poids par rapport au poids de la solution. Elle est de préférence supérieure à 200 mPa.s (200 cps) (Brookfield, 25°C).

Pour mettre en œuvre l'étape b), tout acide ou produit acide pourra être utilisé. On peut citer par exemple de façon non limitative l'acide chlorhydrique, l'acide sulfurique, et l'acide nitrique. L'acide est avantageusement ajouté sous la forme d'une solution aqueuse d'acide.

L'abaissement de pH par ajout d'acide pourra se faire en une fois ou plusieurs fois, en coulée continue ou en ajout complet et rapide. La quantité d'acide utilisée et la manière d'incorporer l'acide seront facilement déterminées par l'homme de l'art de manière à ajuster le pH de la solution au pH désiré. L'ajout est préférentiellement effectué sous agitation.

### Le (co)polymère cationique ou amphotère dérivé d'acrylamide sur lequel est effectué le post-traitement selon l'invention

II est obtenu par réaction de dégradation d'Hofmann sur un (co)polymère base.

### Le (co)polymère " base "

En pratique, le (co)polymère base est préparé avant la dégradation d'Hofmann. Le (co)polymère base utilisé contient :
- au moins 5 moles % d'au moins un monomère non ionique choisi dans le groupe comprenant l'acrylamide, le méthacrylamide, le N, N diméthylacrylamide, et l'acrylonitrile, préférentiellement l'acrylamide,
- optionnellement jusqu'à 95 moles % d'au moins :
   ∘ un monomère éthylénique cationique non saturé, choisi préférentiellement dans le groupe comprenant les monomères de type dialkylaminoalkyl (méth)acrylamide, diallylamine, méthyldiallylamine, et leurs sels d'ammonium quaternaire On citera en particulier le chlorure de diméthyldiallylammonium (DADMAC), le chlorure d'acrylamidopropyltriméthylammonium (APTAC) et/ou le chlorure de méthacrylamidopropyltriméthylammonium (MAPTAC),
   ∘ et/ou au moins un monomère non ionique choisi préférentiellement dans le groupe comprenant le N-vinyl acétamide, N-vinyl formamide, la N-vinylpyrrolidone et/ou le vinyl acétate,
   ∘ et/ou au moins un monomère anionique de type acide ou anhydride choisi dans le groupe comprenant l'acide (méth)acrylique, l'acide acrylamidométhylpropyl sulfonique, l'acide itaconique, l'anhydride maléique, l'acide maléique, l'acide méthallyl sulfonique, l'acide vinylsulfonique, et leurs sels,
   ∘ et/ou au moins un composé polyfonctionnel additionnel choisi dans le groupe comprenant polyéthylèneimine, polyamine (primaire ou secondaire), polyallylamine, polythiols, les polyalcools, polyamides épichlorhydrine (PAE), et polyamines amides (PAA), avantageusement polyethylèneimine.

En association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 10 moles%, de préférence inférieures à 5 moles%, voire inférieur à 1% et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide, les dérivés d'acide acrylique comme les alkyl acrylates et méthacrylates.

Selon une caractéristique préférée de l'invention, le (co)polymère base pourra être ramifié.

Selon un mode de réalisation préféré de l'invention, le copolymère base est un copolymère cationique. Préférentiellement il contient au moins 5 mol% de monomères cationiques.

La ramification du (co)polymère base peut être réalisée de préférence durant (ou éventuellement après) la polymérisation des monomères du (co)polymère " base ", en présence d'au moins un agent ramifiant polyfonctionnel et éventuellement d'au moins un agent de transfert. On trouvera ci-dessous une liste non limitative des ramifiants : méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine, le formaldéhyde, les composés de type glycidyléther comme l'éthylèneglycol di glycidyléther, ou des époxy ou tout autre moyen bien connu de l'homme de métier permettant la réticulation.

En pratique, l'agent de ramification est introduit avantageusement à raison de cinq à cinquante milles (5 à 50000) parties par million en poids par rapport à la matière active, de préférence 5 à 10000, avantageusement de 5 à 5000. Avantageusement, l'agent de ramification est le méthylène bis acrylamide (MBA).

Au moins un agent de transfert peut également être utilisé lors de la synthèse du polymère base. On trouvera ci-dessous une liste non limitative des agents de transfert : alcool isopropylique, hypophosphite de sodium, et mercaptoethanol.

L'homme de métier saura choisir la meilleure combinaison en fonction de ses connaissances propres, de la présente description, ainsi que des exemples ci-après.

Le (co)polymère servant de base à la réaction de dégradation d'Hofmann ne nécessite pas le développement de procédé de polymérisation particulier. Les principales techniques de polymérisation, bien connues par l'homme de métier et pouvant être utilisées incluent notamment : la polymérisation par précipitation, la polymérisation en émulsion (aqueuse ou inverse) suivie ou non d'une étape de distillation et/ou de spray drying, et la polymérisation en suspension ou la polymérisation en solution, ces deux dernières techniques étant préférées.

Il est également possible d'ajouter dans la solution de (co)polymère base, avant ou pendant la réaction de dégradation d'Hofmann certains additifs qui sont susceptibles de réagir sur les fonctions isocyanates du polymère, fonctions qui sont générées en cours de dégradation selon le schéma réactionnel décrit ci-avant. De manière générale, il s'agit de molécules portant des fonctions chimiques nucléophiles telles que des fonctions hydroxyle, aminé... A titre d'exemples, les additifs en question peuvent donc être de la famille : des alcools, des polyols (e.g. amidon), des polyamines, des polyéthylène imines...

Selon un autre mode de réalisation particulier, le (co)polymère base contient en son sein même (en plus des monomères le constituant) au moins un composé polyfonctionnel contenant au moins 3 hétéroatomes choisis parmi N, S, O, P et présentant chacun au moins un hydrogène mobile.

En pratique, le composé multifonctionnel est ajouté avant ou pendant la polymérisation du (co)polymère base. Il peut également être greffé sur le (co)polymère base préalablement à la réaction d'Hofmann. L'incorporation du composé polyfonctionnel est avantageusement réalisé comme mentionné dans le document WO 2011/015783.

Ce composé polyfonctionnel est avantageusement choisi dans le groupe comprenant les polyéthylèneimine, polyamine (primaire ou secondaire), polyallylamine, polythiols, polyalcools, polyamides epichloridrine, et polyamines amides.

Il s'agit avantageusement de la polyéthylèneimine ou de la polyamine amide.

Selon ce mode de réalisation particulier, le (co)polymère base contient au moins 100 ppm d'un composé polyfonctionnel. Le (co)polymère base contient avantageusement au maximum 10% en poids d'un composé polyfonctionnel.

L'incorporation de sels d'ions cationiques polyvalents, comme mentionnée dans la demande de brevet de la Demanderesse WO 2010/061082, peut aussi être réalisée dans le but d'augmenter la stabilité de produits présentant un coefficient Alpha inférieur à 1.

La réaction de dégradation d'Hofmann sur le copolymère " base "

La réaction d'Hofmann nécessite la conversion des fonctions amide (et le cas échéant nitrile) en fonction aminée en faisant intervenir 2 facteurs principaux (exprimés en rapports molaires) :
- Alpha = (hypochlorite d'alcalin et/ou d'alcalino-terreux/ groupement amide
- Beta = (hydroxyde d'alcalin et/ou alcalino-terreux / hypochlorite d'alcalin et/ou d'alcalino-terreux)

A partir d'une solution de (co)polymère " base " précédemment décrit, de concentration comprise entre 5 et 40% en poids, de préférence entre 20 et 30%, on détermine la quantité molaire de fonction acrylamide totale. On choisit alors le niveau de dégradation Alpha souhaité (qui correspond au degré de fonction amine voulue c'est-à-dire au nombre de fonctions amide/nitrile converties en fonctions amine), qui permet de déterminer la quantité sèche d'hypohalogénure d'alcalin et/ou d'alcalino-terreux et ensuite le coefficient béta, qui permet de déterminer la quantité sèche d'hydroxyde d'alcalin et/ou alcalino-terreux.

On prépare alors une solution d'hypohalogénure et d'hydroxyde d'alcalin et/ou alcalino-terreux à partir des rapports alpha et béta. Selon l'invention, les réactifs préférablement utilisés sont l'hypochlorite de sodium (eau de javel) et la soude (hydroxyde de sodium).

Le coefficient Alpha hypohalogénure/monomère non ionique utilisé pour la préparation des polymères est avantageusement supérieur à 0.1, voire à 0.3, plus avantageusement supérieur à 0.5 et de préférence inférieur à 1.

Afin de stabiliser les fonctions aminées qui sont produites, on peut éventuellement rajouter, dans le réacteur contenant le (co)polymère base, un (ou éventuellement plusieurs) dérivés d'ammonium quaternaire tel que cela est décrit dans le document JP 57077398. Celui-ci a en effet pour but d'éviter la réaction entre les fonctions amine et les fonctions amide résiduelles. On notera, en outre, que l'ajout de ces agents peut être effectué en séparé, en simultané, en mélange ou non, dans un ordre quelconque d'introduction, et en un ou plusieurs points d'injection.

L'augmentation en cationicité du (co)polymère base s'effectue lors de la dégradation dite d'Hofmann, par l'utilisation/consommation, en totalité ou non, d'un hypohalogénure d'alcalin ou d'alcalino-terreux.

De plus, il est également possible d'utiliser des (co)polymères cationiques ou amphotères d'acrylamide de l'invention obtenus par réaction de dégradation dite d'Hofmann, sous la forme d'un mélange avec un ou plusieurs autre(s) polymère(s) synthétique(s) ou naturel.

### Les polymères obtenus après le post-traitement selon l'invention.

La solution polymérique selon l'invention présente avantageusement une viscosité V3 (Brookfield, 25°C,) supérieure à 150 mPa.s (150 cps), lorsque la concentration en (co)polymère est de 8% en poids par rapport au poids de la solution. Elle est de préférence supérieure à 200 mPa.s (200 cps). Elle est supérieure à la viscosité initiale V1.

Les polymères de l'invention ont une densité de charge cationique de préférence supérieure à 2 meq/g, et avantageusement supérieure à 5 meq/g.

De même, bien que préparés en solution, les polymères de l'invention peuvent également être proposés sous forme solide. Dans ces conditions, la forme solide contient non seulement le (co)polymère, mais également une proportion de sel obtenue à l'issue de la réaction de dégradation d'Hofmann. En pratique, ils sont obtenus entre autres par des procédés consistant à sécher la solution précédemment citée. Les principales techniques d'isolation alors utilisées sont celles du séchage par atomisation ou pulvérisation (qui consiste à créer un nuage de fines gouttelettes dans un courant gazeux chaud pendant une durée contrôlée), du séchage à tambour, des sécheurs à lit fluidisé...

La solution polymérique aqueuse selon l'invention peut être utilisée avec succès pour la fabrication de papiers et cartons d'emballage, de papiers supports de couchage, de tout type de papiers, cartons ou analogues nécessitant l'utilisation d'un polymère cationique comme agent de coagulation et/ou rétention et/ou promoteur de charge cationique.

Les polymères de l'invention offrent une amélioration notable des performances d'égouttage par rapport aux mêmes polymères non traités, par rapport aux polymères d'Hofmann de l'art antérieur.

Ils permettent, en particulier, un gain significatif en productivité des machines à papier notamment grâce à l'obtention de bonnes propriétés d'égouttage et une résistance à l'éclatement et à la traction très élevée.

La présente invention concerne également l'utilisation de la solution polymérique aqueuse selon l'invention comme agent de floculation, rétention et/ou drainage, et résistance à sec dans un procédé de fabrication de papier.

De par leurs propriétés intrinsèques (stabilisation, cationisation, complexation...), les polymères de l'invention peuvent également avoir un intérêt dans des applications très diverses, on citera de façon non limitative : le traitement des eaux (potables ou usées), les techniques de coagulation / floculation, l'industrie minière, l'industrie des cosmétiques, l'industrie de la détergence, et l'industrie textile.

L'invention et les avantages qui en découlent ressort bien des exemples de réalisation suivants.

### Exemples

### Les (co)polymères cationiques dérivés d'acrylamide

### Polymère A :

Un polymère cationique A est obtenu par une réaction de dégradation d'Hofmann sur un copolymère base (20% en matière active) d'acrylamide (70% molaire) et de chlorure de dimethyldiallyl ammonium (DADMAC) (30% molaire) ramifié (MBA : 600 ppm en poids / matière active) modifié avec un polymère de polyamineamide (de type Retaminol CO1 de Kemira), à hauteur de 2.5% en poids par rapport à la matière active.

Pour ce faire, la polyamineamide est mélangée au monomère de DADMAC et au MBA dans le réacteur.

L'acrylamide est incorporée en coulée continu pendant 2h, dans un milieu réactionnel maintenu à 85°C. La catalyse est faite au metabisulfite de sodium SPS et au métabisulfite (MBS), catalyseurs bien connus de l'homme de métier.

Le polymère base ainsi obtenu présente une viscosité de 5500 mPa.s (5500 cps) (LV3, 12 rpm).

La dégradation Hofmann en elle-même se déroule de la même manière que dans l'exemple 1 du document de la Demanderesse WO/2010/061082.

Un sel de calcium sous la forme de chlorure de calcium (CaCl₂) est dissous dans la solution de copolymère base, à hauteur de 2% en poids par rapport au copolymère base.

La réaction de dégradation d'Hofmann est réalisée sur la solution ainsi préparée à la température de 25°C à l'aide d'hypochlorite de sodium et d'hydroxyde de sodium dans des proportions nécessaires à obtenir un alpha partiel (0.7).

Le produit intermédiaire obtenu est alors décarboxylé dans un excès d'acide chlorhydrique, puis ajusté en pH par addition de soude (pH de l'ordre de 3 à 4).

Le copolymère cationique dérivé d'acrylamide ainsi réalisé présente une viscosité V1 de 72 mPa.s (72 cps) (25°C, Brookfield LV1, 60 rpm) et une concentration de 8.5%.

### Polymère B :

Un polymère cationique B est obtenu par une réaction de dégradation d'Hofmann sur un copolymère base (20% en matière active) d'acrylamide (70% molaire) et de chlorure de dimethyldiallyl ammonium (DADMAC) (30% molaire) ramifié (MBA : 1000 ppm en poids / matière active) modifié avec un polymère de polyamineamide (de type Retaminol CO1 de Kemira), à hauteur de 2.5% en poids par rapport au poids de la matière active.

Pour ce faire, la polyamineamide est mélangée au monomère de DADMAC et au MBA dans le réacteur.

L'acrylamide est incorporée en coulée continue pendant 3 heures, dans le milieu réactionnel maintenu à 85°C. La catalyse est faite au metabisulfite de sodium SPS et au métabisulfite (MBS), catalyseurs bien connus de l'homme de métier.

Le polymère base ainsi obtenu présente une viscosité de 8000 mPa.s (8000 cps) (LV3, 12 rpm).

La dégradation Hofmann en elle-même se déroule de la même manière que dans l'exemple 1 du document de la Demanderesse WO/2010/061082.

Un sel de calcium sous la forme de chlorure de calcium (CaCl₂) est dissous dans la solution de copolymère base, à hauteur de 2% en poids par rapport au poids du copolymère base.

La réaction de dégradation d'Hofmann est réalisée sur la solution ainsi préparée à la température de 25°C, à l'aide d'hypochlorite de sodium et d'hydroxyde de sodium dans des proportions nécessaires à obtenir un alpha partiel (0.85).

Le produit intermédiaire obtenu est alors décarboxylé dans un excès d'acide chlorhydrique, puis ajusté en pH par addition de soude (pH de l'ordre de 3 à 4).

Le copolymère cationique dérivé d'acrylamide ainsi réalisé présente une viscosité V1 de 60 mPa.s (60 cps) (25°C, Brookfield LV1, 60 rpm) et une concentration de 8.0%.

### Post traitement1 (CONTRE-EXEMPLE) :

Le post traitement 1 se déroule selon le procédé développé dans le document de la Demanderesse WO 2009/013423 : le polymère A est ainsi post ramifié par un ajout de 1% en poids/matière active de polyéthylène glycol triépoxyde (GrilBond G 1701). Le copolymère cationique dérivé d'acrylamide ainsi réalisé présente une viscosité de 324 mPa.s (324cps) (25°C, Brookfield LV2, 60 rpm) et une concentration de 8.0%.

### Post traitement 2 (INVENTION) :

### Post-traitement 2.1

Le polymère A, refroidi à 15°C, est post traité en l'alcalinisant à pH=9, par ajout d'une solution aqueuse de soude diluée à 30% en poids, sous agitation. Un temps de maturation de 1 heure est observé, toujours à 15°C. La viscosité V2 atteinte est de 1300 mPa.s (1300 cps) (25°C, Brookfield LV3, 60 rpm). Le pH est ensuite abaissé à pH=3 par ajout d'acide chlorhydrique 30%. La solution aqueuse de copolymère cationique dérivé d'acrylamide ainsi obtenue présente une viscosité V3 de 938 mPa.s (938 cps) (25°C, Brookfield LV3, 60 rpm) et une concentration de 8.0%.

### Post traitement 2.2

Le polymère A, refroidi à 15°C, est post traité en l'alcalinisant à pH=9, par ajout d'une solution aqueuse de soude diluée à 30% en poids, sous agitation. Un temps de maturation de 3 heures est observé, toujours à 15°C. La viscosité V2 atteinte est de 12500 mPa.s (12500 cps) (25°C, Brookfield LV4, 30 rpm). Le pH est ensuite abaissé à pH=3 par ajout d'acide chlorhydrique 30%. La solution aqueuse de copolymère cationique dérivé d'acrylamide ainsi obtenue présente une viscosité V3 de 6000 mPa.s (6000 cps) (25°C, Brookfield LV3, 12 rpm) et une concentration de 8.0%.

### Post traitement 2.3

Le polymère B, refroidi à 15°C, est post traité en l'alcalinisant à pH=8, par ajout d'une solution aqueuse de soude diluée à 30% en poids, sous agitation. Un temps de maturation de 2 heures est observé, toujours à 15°C. La viscosité V2 atteinte est de 4700 mPa.s (4700 cps) (25°C, Brookfield LV3, 12 rpm). Le pH est ensuite abaissé à pH=3 par ajout d'acide chlorhydrique 30%. La solution aqueuse de copolymère cationique dérivé d'acrylamide ainsi obtenue présente une viscosité V3 de 1600 mPa.s (1600 cps) (25°C, Brookfield LV3, 30 rpm) et une concentration de 7.5%.

### Post traitement 3 (CONTRE-EXEMPLE) :

Le polymère A, refroidi à 15°C, est post traité en l'alcalinisant à pH=6, par ajout d'une solution de soude diluée à 30% en poids, sous agitation. Un temps de maturation de 10 minutes est observé, toujours à 15°C. La viscosité V2 atteinte est de 94 mPa.s (94 cps) (25°C, Brookfield LV1, 30 rpm). Le pH est ensuite abaissé à pH=3 par ajout d'acide chlorhydrique 30%. La solution aqueuse de copolymère cationique dérivé d'acrylamide ainsi obtenue présente une viscosité V3 de 86 mPa.s (86 cps) (25°C, Brookfield LV1, 60 rpm) et une concentration de 8.0%.

Test des performances en égouttage des polymères issus de la réaction d'Hofmann.

### Test CSF

### Séquence CSF à 1000 rpm (tours par minute) :

Utilisation d'une formette statique pour réaliser l'agitation de la pâte. Introduction de 1 litre de pâte à 0.3 %.
T=0s : mise en agitation de la pâte
T=10s : ajout du polymère
T=30s : arrêt de l'agitation et récupération du litre de pâte. Réalisation du test TAPPI T227OM-94.

Performances par rapport aux polymères de l'art antérieur :

**Tableau 1 - Performance d'égouttage CSF à 1 kg/tonne**

| Polymère | Dosage Cationique (kg/tonne) | Valeur CSF (ml) | % Amélioration en CSF |
|---|---|---|---|
| Blanc | 0 | 293 | 0 |
| Polymère A | 1 | 357 | 22 |
| Polymère B | 1 | 347 | 18 |
| Post traitement 1 | 1 | 366 | 25 |
| Post traitement 2.1 | 1 | 387 | 32 |
| Post traitement 2.2 | 1 | 395 | 35 |
| Post traitement 2.3 | 1 | 399 | 36 |
| Post traitement 3 | 1 | 337 | 23 |

**Tableau 2 - Performance d'égouttage CSF à 1.3 kg/tonne**

| Polymère | Dosage Cationique (kg/tonne) | Valeur CSF (ml) | % Amélioration en CSF |
|---|---|---|---|
| Blanc | 0 | 296 | 0 |
| Polymère A | 1.3 | 385 | 30 |
| Polymère B | 1.3 | 380 | 28 |
| Post traitement 1 | 1.3 | 397 | 34 |
| Post traitement 2.1 | 1.3 | 420 | 42 |
| Post traitement 2.2 | 1.3 | 430 | 45 |
| Post traitement 2.3 | 1.3 | 427 | 44 |
| Post traitement 3 | 1.3 | 388 | 31 |

**Tableau 3 - Performance d'égouttage à 1.5 kg/tonne**

| Polymère | Dosage Cationique (kg/tonne) | Valeur CSF (ml) | % Amélioration en CSF |
|---|---|---|---|
| Blanc | 0 | 295 | 0 |
| Polymère A | 1.5 | 410 | 39 |
| Polymère B | 1.5 | 408 | 38 |
| Post traitement 1 | 1.5 | 428 | 45 |
| Post traitement 2.1 | 1.5 | 448 | 52 |
| Post traitement 2.2 | 1.5 | 460 | 56 |
| Post traitement 2.3 | 1.5 | 465 | 58 |
| Post traitement 3 | 1.5 | 413 | 40 |

| | | | |
|---|---|---|---|
| CSF : mesure du degré "d'égouttabilité " de la pâte CSF : Canadian Standard Freeness | | | |

Pour chacune de ces analyses, les valeurs les plus élevées correspondent aux meilleures performances.

Les polymères post traités, selon le post-traitement de l'invention, présentent les meilleures performances d'égouttage à tout dosage, par rapport aux polymères de l'art antérieur.

En outre, le polymère post traité 2.1 permet d'obtenir des performances proches de celles du polymère A, mais en mettant en œuvre un dosage en polymère moindre. Les performances du polymère A à 1.3 kg/t sont atteintes avec un dosage de 1kg/t de polymère post traité 2.1. De plus, les performances du polymère A à 1.5 kg/t sont atteintes avec un dosage de 1.3kg/t de polymère post traité 2.1.

Ces réductions de dosage, pour des performances équivalentes, permettent de proposer au client final des systèmes moins onéreux, et ainsi d'atteindre un marché que le prix des technologies de l'art antérieur pouvait jusqu'à présent rebuter.

La solution polymérique issue du post traitement 3, pour laquelle la viscosité V2 est seulement supérieure de 30% (1.3 fois supérieure) à la viscosité V1, ne permet pas d'obtenir une amélioration significative des performances.

### Test DDA

Le DDA (Dynamic drainage analyzer) permet de déterminer le temps nécessaire pour égoutter sous vide une suspension fibreuse. Le polymère est ajouté à la pâte humide dans le cylindre du DDA.

### Séquence DDA à 1000 rpm (tours par minute) :

Introduction de 0.6 litre de pâte à 1.0 %.
T=0s : mise en agitation de la pâte
T=10s : ajout du polymère
T=30s : arrêt de l'agitation et égouttage sous vide à 200mBar pendant 70s

**Tableau 4 - Performance d'égouttage sous vide à 1 kg/t et 1.5 kg/t/**

| | | | | % Amélioration DDA égouttage | |
|---|---|---|---|---|---|
| Exemple | V1 | V2 | V3 | 1Kg/T | 1,5Kg/T |
| Polymère A | 72 | NA | NA | 32 | 44 |
| Polymère B | 60 | NA | NA | 30 | 43 |
| Post traitement 1 | 324 | NA | NA | 35 | 45 |
| Post traitement 2.1 | 72 | 3500 | 938 | 41 | 52 |
| Post traitement 2.2 | 72 | 12500 | 6000 | 43 | 52 |
| Post traitement 2.3 | 60 | 4700 | 1600 | 47 | 55 |
| Post traitement 3 | 72 | 94 | 86 | 33 | 43 |

| | | | | | |
|---|---|---|---|---|---|
| NA : Non Applicable | | | | | |

Les polymères post-traités selon l'invention permettent d'obtenir des performances de drainage sous vide nettement meilleures que les polymères non post-traités et que les polymères post traités dans des conditions en dehors de celles définies par l'invention.

### Procédure d'évaluation de la résistance à sec

Des formettes de papier sont réalisées avec une formette dynamique automatique.

Le « slurry » de pâte est réalisé par désintégration de pâte sèche afin d'obtenir une concentration finale de 3%.

La quantité nécessaire de pâte est prélevée de manière à obtenir au final une feuille présentant un grammage de 60g/m².

La pâte concentrée est introduite dans le cuvier de la formette dynamique et y est agitée. A cette pâte sont injectés, dans des essais différents, les polymères A, post-traité 1, post traité 2, ainsi que le Xelorex RS1200 de BASF, une référence actuelle en terme d'agent DSR (Dry Strength Resistance, résistance à sec). Cette pâte est ensuite diluée jusqu'à une concentration de 0.32%.

En mode manuel, la pâte est pompée jusqu'au niveau de la buse afin d'amorcer le circuit.

Un buvard et la toile de formation sont placés dans le bol de la formette dynamique avant de démarrer la rotation du bol à 900m/min et de construire le mur d'eau. Le polymère sera injecté 10 secondes avant le démarrage du cycle de fabrication de la feuille. La feuille est alors réalisée (en mode automatique) par 22 allers-retours de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 117°C. Les deux buvards sont ensuite retirés et la feuille est stockée pendant une nuit dans une pièce à humidité et température contrôlées (50% d'humidité relative et 23°C). Les propriétés de résistance à sec de toutes les feuilles obtenues par cette procédure sont alors évaluées.

L'éclatement (Burst index) est mesuré avec un éclatomètre Messmer Buchel M 405 (moyenne sur 14 mesures).

La traction à sec est mesurée dans le sens machine avec un appareil de traction Testometric AX (moyenne sur 5 échantillons).

Les tests sont réalisés avec une pâte à pH neutre composée à 100% de carton d'emballage recyclé.

Résultats obtenus :

**Tableau 5 - Performance de résistance à sec à 1.5 kg/tonne**

| Polymère | Dosage Polymère | Eclatement Burst Index | Longueur rupture (km) |
|---|---|---|---|
| - | - | 2.50 | 4.89 |
| Polymère A | 1.5 kg/t | 3.20 | 6.10 |
| Polymère B | 1.5 kg/t | 3.25 | 6.13 |
| Post traitement 1 | 1.5 kg/t | 3.19 | 5.99 |
| Post traitement 2.1 | 1.5 kg/t | 3.24 | 6.14 |
| Post traitement 2.2 | 1.5 kg/t | 3.2 | 6.08 |
| Post traitement 2.3 | 1.5 kg/t | 3.18 | 6.1 |
| Post traitement 3 | 1.5 kg/t | 3.20 | 6.09 |
| Xelorex RS1200 | 1.5 kg/t | 3.22 | 6.15 |

Nous observons qu'en plus de meilleures performances d'égouttage, les polymères post-traités selon l'invention présentent des performances en résistance à sec au moins équivalentes aux technologies de l'art antérieur.

## Revendications

1. Procédé de préparation d'une solution polymérique aqueuse contenant au moins un (co)polymère cationique ou amphotère, comprenant les étapes suivantes :
- réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base d'au moins un monomère non ionique choisi dans le groupe comprenant l'acrylamide, le méthacrylamide, le N,N diméthylacrylamide, et l'acrylonitrile ;
1/ obtention d'une solution polymérique aqueuse de viscosité V1 contenant au moins un (co)polymère cationique ou amphotère issu de la réaction de dégradation d'Hofmann ;
2/ post-traitement de cette solution polymérique aqueuse de viscosité V1 résultant de l'étape 1/ ;
***caractérisé* en ce que** le post-traitement de l'étape 2/ comprend les étapes successives suivantes :
a)
(a1) on mesure la viscosité V1 de la solution polymérique aqueuse issue de l'étape 1/ ; puis
(a2) on ajuste le pH de la solution polymérique aqueuse résultant de l'étape (a1) à une valeur supérieure ou égale à 5,5, ledit ajustement entraînant une augmentation de la viscosité V1 de la solution polymérique aqueuse jusqu'à une valeur V2 correspondant à au moins 1,5 fois la valeur V1 tout en étant inférieure à 100 000 mPa.s ;
la viscosité V1 étant augmentée sans addition d'un composé polyfonctionnel ;
les viscosités étant mesurées avec un viscosimètre Brookfield, à 25°C avec un module LV ;
b) on abaisse le pH de la solution polymérique aqueuse résultant de l'étape (a2) à une valeur comprise entre 2 et 5.

2. Procédé selon la revendication 1, ***caractérisé* en ce que** la viscosité V2 est supérieure ou égale à 2 fois la viscosité V1.

3. Procédé selon l'une des revendications 1 ou 2, ***caractérisé* en ce que** la viscosité V2 de la solution polymérique aqueuse est inférieure à 50 000 mPa.s.

4. Procédé selon l'une des revendications 1 à 3, ***caractérisé* en ce que** dans l'étape b), on abaisse le pH à une valeur comprise entre 3 et 4.

5. Procédé selon l'une des revendications 1 à 4, **caractérisé en ce que** le pH de la solution polymérique aqueuse sur laquelle le post-traitement est effectué est compris entre 2 et 5 avant le post-traitement.

6. Procédé selon l'une des revendications 1 à 5, ***caractérisé* en ce que** la concentration de la solution polymérique aqueuse sur laquelle le post-traitement est effectué est comprise entre 0,5% et 50% en poids de (co)polymère par rapport au poids de la solution polymérique aqueuse.

7. Procédé selon l'une des revendications 1 à 6, ***caractérisé* en ce que** le ou les (co)polymères contenus dans la solution polymérique post-traitée sont uniquement et directement issus de la dégradation d'Hofmann d'un (co)polymère base.

8. Procédé selon l'une des revendications 1 à 7, ***caractérisé* en ce que** dans l'étape a), on ajuste le pH par addition d'au moins un composé choisi dans le groupe comprenant les hydroxydes d'alcalin, les hydroxydes d'alcalino-terreux, l'ammoniac, et la chaux vive.

9. Procédé selon l'une des revendications 1 à 8, ***caractérisé* en ce que** dans l'étape b), on abaisse le pH par addition d'au moins un composé choisi dans le groupe comprenant l'acide chlorhydrique, l'acide sulfurique, et l'acide nitrique.

10. Procédé selon l'une des revendications 2 à 9, ***caractérisé* en ce que**, dans l'étape b), on abaisse le pH de la solution polymérique aqueuse entre 2 et 5 et on diminue sa viscosité à une valeur V3, supérieure à V1 et inférieure à V2.

11. Procédé selon l'une des revendications 1 à 10, ***caractérisé* en ce que** le (co)polymère base utilisé contient :
a. au moins 5 moles % d'au moins un monomère non ionique choisi dans le groupe comprenant l'acrylamide, le méthacrylamide, le N, N diméthylacrylamide, et l'acrylonitrile,
optionnellement jusqu' à 95 moles % d'au moins :
b. un monomère éthylénique cationique non saturé, choisi dans le groupe comprenant les monomères de type dialkylaminoalkyl (meth)acrylamide, diallylamine, methyldiallylamine et leurs sel d'ammonium quaternaire ,
c. et/ou au moins un monomère non ionique choisi dans le groupe comprenant le N-vinyl acetamide, N-vinyl formamide, la N- vinylpyrrolidone et le vinyl acétate,
d. et/ou au moins un monomère anionique choisi dans le groupe comprenant l'acide (méth)acrylique, l'acide acrylamidomethylpropyl sulfonique, l'acide itaconique, l'anhydride maléique, l'acide maléique, l'acide méthallyl sulfonique, l'acide vinylsulfonique, et leurs sels,
e. et/ou au moins un composé polyfonctionnel choisi dans le groupe comprenant polyéthylèneimine, polyamine primaire, polyamine secondaire, polyallylamine, polythiols, polyalcools, polyamides epichlorhydrine (PAE), et polyamines amides (PAA).

12. Procédé selon l'une des revendications 1 à 11, ***caractérisé* en ce que** le (co)polymère base contient en outre au moins un composé polyfonctionnel contenant au moins 3 hétéroatomes choisis parmi N, S, O, P et présentant chacun au moins un hydrogène mobile.

13. Procédé selon l'une des revendications 1 à 12, ***caractérisé* en ce que** dans l'étape a), on ajuste le pH entre 5.5 et 12.

14. Utilisation de la solution polymérique aqueuse susceptible d'être obtenue selon l'une des revendications 1 à 13, comme agent de floculation, rétention et/ou drainage, et résistance à sec dans un procédé de fabrication de papier.

## Patentansprüche

1. Verfahren zur Herstellung einer wässrigen Polymerlösung, die mindestens ein kationisches oder amphoteres (Co)polymer enthält, das folgende Schritte umfasst:
- Hofmann-Abbaureaktion in wässriger Lösung in Gegenwart eines Erdalkali- und/oder Alkalihydroxids und eines Erdalkali- und/oder Alkalihypohalogenits mit einem Basis(Co)polymer mit mindestens einem nichtionischen Monomer, das aus der Gruppe Acrylamid, Methacrylamid, N,N-Dimethylacrylamid und Acrylnitril ausgewählt ist;
1/ Erhalt einer wässrigen Polymerlösung mit der Viskosität V1, die mindestens ein kationisches oder amphoteres (Co)polymer enthält, das aus der Hofmannschen Abbaureaktion stammt;
2/ Nachbehandlung dieser wässrigen Polymerlösung mit der Viskosität V1, die aus Schritt 1/ resultiert;
**dadurch *gekennzeichnet,* dass** die Nachbehandlung von Schritt 2/ folgende aufeinanderfolgende Schritte umfasst:
a.
(a1) die Viskosität V1 der wässrigen Polymerlösung aus Schritt 1/ wird gemessen; anschließend
(a2) wird der pH-Wert der wässrigen Polymerlösung aus Schritt (a1) auf einen Wert von 5,5 oder höher eingestellt, wobei die Einstellung zu einem Anstieg der Viskosität V1 der wässrigen Polymerlösung auf einen Wert V2 führt, der mindestens dem 1,5-fachen des Wertes V1 entspricht, jedoch weniger als 100.000 mPa.s beträgt;
wobei die Viskosität V1 ohne Zusatz einer polyfunktionellen Verbindung erhöht wird;
wobei die Viskositäten mit einem Brookfield-Viskosimeter bei 25°C mit einem Modul LV gemessen werden,
b. der pH-Wert der aus Schritt (a2) resultierenden wässrigen Polymerlösung wird auf einen Wert zwischen 2 und 5 gesenkt.

2. Verfahren nach Anspruch 1, **dadurch *gekennzeichnet,* dass** die Viskosität V2 größer oder gleich dem Zweifachen der Viskosität V1 ist.

3. Verfahren nach Anspruch 1 oder 2, **dadurch *gekennzeichnet,* dass** die wässrigen Polymerlösung eine Viskosität V2 von weniger als 50.000 mPa.s aufweist.

4. Verfahren nach einem der Ansprüche 1 bis 3, **dadurch *gekennzeichnet,* dass** der pH-Wert in Schritt b) auf einen Wert zwischen 3 und 4 abgesenkt wird.

5. Verfahren nach einem der Ansprüche 1 bis 4, **dadurch *gekennzeichnet,* dass** der pH-Wert der wässrigen Polymerlösung, an der die Nachbehandlung durchgeführt wird, vor der Nachbehandlung zwischen 2 und 5 liegt.

6. Verfahren nach einem der Ansprüche 1 bis 5, **dadurch *gekennzeichnet,* dass** die Konzentration der wässrigen Polymerlösung, an der die Nachbehandlung durchgeführt wird, zwischen 0,5 und 50 Gew.-% eines (Co)polymers, bezogen auf das Gewicht der wässrigen Polymerlösung, beträgt.

7. Verfahren nach einem der Ansprüche 1 bis 6, **dadurch *gekennzeichnet,* dass** das (die) in der nachbehandelten Polymerlösung enthaltene(n) (Co)polymer(e) ausschließlich und direkt aus dem Hofmann-Abbau eines Basis(co)polymers stammt (stammen).

8. Verfahren nach einem der Ansprüche 1 bis 7, **dadurch *gekennzeichnet,* dass** der pH-Wert in Schritt a) durch Zugabe mindestens einer Verbindung eingestellt wird, die aus der Gruppe ausgewählt ist, die aus Alkalihydroxiden, Erdalkalihydroxiden, Ammoniak und Ätzkalk besteht.

9. Verfahren nach einem der Ansprüche 1 bis 8, **dadurch *gekennzeichnet,* dass** der pH-Wert in Schritt b) durch Zugabe mindestens einer Verbindung aus der Gruppe bestehend aus Salzsäure, Schwefelsäure und Salpetersäure gesenkt wird.

10. Verfahren nach einem der Ansprüche 2 bis 9, **dadurch *gekennzeichnet,* dass** der pH-Wert der wässrigen Polymerlösung in Schritt b) auf 2 bis 5 gesenkt wird und ihre Viskosität auf einen Wert V3 gesenkt wird, der über V1 und unter V2 liegt.

11. Verfahren nach einem der Ansprüche 1 bis 10, **dadurch *gekennzeichnet,* dass** das verwendete Basis(co)polymer Folgendes enthält:
a. mindestens 5 Mol-% mindestens eines nichtionischen Monomers, ausgewählt aus der Gruppe bestehend aus Acrylamid, Methacrylamid, N,N-Dimethylacrylamid und Acrylnitril, optional bis zu 95 Mol-% mit mindestens:
b. einem ungesättigten, kationischen, ethylenischen Monomer, ausgewählt aus der Gruppe bestehend aus Monomeren vom Typ Dialkylaminoalkyl(meth)acrylamid, Diallylamin, Methyldiallylamin und deren quaternären Ammoniumsalzen,
c. und/oder mindestens einem nichtionischen Monomer, das aus der Gruppe ausgewählt ist, die aus N-Vinylacetamid, N-Vinylformamid, N-Vinylpyrrolidon und Vinylacetat besteht,
d. und/oder mindestens einem anionischen Monomer, ausgewählt aus der Gruppe, bestehend aus (Meth)acrylsäure, Acrylamidomethylpropyl-Sulfonsäure, Itaconsäure, Maleinsäureanhydrid, Maleinsäure, Methallylsulfonsäure, Vinylsulfonsäure und deren Salzen,
e. und/oder mindestens einer polyfunktionelle Verbindung, die aus der Gruppe ausgewählt ist, die aus Polyethylenimin, primärem Polyamin, sekundärem Polyamin, Polyallylamin, Polythiolen, Polyalkoholen, Epichlorhydrin-Polyamiden (PAE) und Polyaminoamiden (PAA) besteht.

12. Verfahren nach einem der Ansprüche 1 bis 11, **dadurch *gekennzeichnet,* dass** das Basis(co)polymer zusätzlich mindestens eine polyfunktionelle Verbindung enthält, die mindestens 3 Heteroatome enthält, die aus N, S, O, P ausgewählt sind und jeweils mindestens einen beweglichen Wasserstoff aufweisen.

13. Verfahren nach einem der Ansprüche 1 bis 12, **dadurch *gekennzeichnet,* dass** der pH-Wert in Schritt a) auf einen Wert zwischen 5,5 und 12 eingestellt wird.

14. Verwendung der wässrigen Polymerlösung, die nach einem der Ansprüche 1 bis 13 als Flockungsmittel, Retentions- und/oder Drainagemittel und Trockenfestigkeit in einem Papierherstellungsverfahren erhalten wird.

## Claims

1. Process for the preparation of an aqueous polymer solution containing at least one cationic or amphoteric (co)polymer, comprising the following steps:
- so-called Hofmann degradation reaction, in aqueous solution, in the presence of an earth alkaline and/or alkaline hydroxide and an earth alkaline and/or alkaline hypohalogenure on a (co)polymer base of at least one non-ionic monomer chosen from the group including acrylamide, methacrylamide, N, N-dimethylacrylamide, and acrylonitrile;
1/ obtaining of an aqueous polymer solution of viscosity V1 containing at least one cationic or amphoteric (co)polymer derived from the Hofmann degradation reaction;
2/ post-processing of this aqueous polymer solution of viscosity V1 from step 1/;
***characterized* in that** post processing of step 2/ comprises the following successive steps:
(a)
(a1) measurement of the V1 viscosity of aqueous polymer solution from step 1/; then
(a2) adjustment of the pH of the aqueous polymer solution from step (a1) to a value greater than or equal to 5.5, said adjustment affording an increase of V1 viscosity of the aqueous polymer solution up to a V2 value corresponding to at least 1.5 times the V1 value while being less than 100,000 mPa.s;
viscosities increase without adding a polyfunctional compound;
viscosities are measured with a Brookfield viscometer, at 25°C with an LV module;
(b) lowering of the pH of the aqueous polymer solution from step (a2) to a value between 2 and 5.

2. Method according to claim 1, ***characterized* in that** the V2 viscosity is greater than or equal to 2 times the V1 viscosity.

3. Method according to claims 1 or 2, ***characterized* in that** the V2 viscosity of the aqueous polymer solution is less than 50,000 mPa.s.

4. As one of claims 1 to 3, ***characterized* in that** in step b), the pH is lowered to a value of between 3 and 4.

5. Method according to any of claims 1 to 4, **characterized in that** the pH of the aqueous polymer solution on which the post-processing is carried is between 2 and 5 prior to post-processing.

6. Method according to any of claims 1 to 5, ***characterized* in that** the concentration of the aqueous polymer solution on which post processing is carried out varies between 0.5% and 50% by weight of (co)polymer compared to the weight of the aqueous polymer solution.

7. Method according to any of claims 1 to 6, ***characterized* in that** the (co)polymers contained in the post-processed polymeric solution are solely and directly from the Hofmann degradation of a (co)polymer base.

8. Method according to any of claims 1 to 7, ***characterized* in that** in step a), the pH is adjusted by the addition of at least one compound selected from the group consisting of the alkali hydroxides, earth alkaline hydroxides, ammonia, and quicklime.

9. Method according to any of claims 1 to 8, ***characterized* in that** in step b), the pH is lowered by the addition of at least one compound selected from the group consisting of hydrochloric acid, sulfuric acid and nitric acid.

10. Method according to any of claims 2 to 9, ***characterized* in that**, in step b), the pH of the aqueous polymer solution is lowered to between 2 and 5, and its viscosity decreased to a value V3, greater than V1 and less than V2.

11. **Method** according to any of claims 1 to 10, ***characterized* in that** the (co)polymer base used contains:
a. at least 5 moles % of at least one non-ionic monomer selected from the group consisting of acrylamide, methacrylamide, N, N-dimethylacrylamide, and acrylonitrile.
optionally up to 95 mole% of at least:
b. a cationic non saturated ethylene monomer, selected from the group consisting of monomers of type dialkylaminoalkyl (meth)acrylamide, diallylamine, methyldiallylamine and their quaternary ammonium salt,
c. and/or at least one non-ionic monomer selected from the group consisting of N-vinyl acetamide, N-vinyl formamide, N-vinylpyrrolidone and vinyl acetate,
d. and/or at least one anionic monomer selected from the group consisting of (meth)acrylic acid, acrylamidomethylpropyl sulfonic acid, itaconic acid, maleic anhydride, maleic acid, methallyl sulfonic acid, vinylsulfonique acid, and their salts,
e. and/or at least one additional polyfunctional compound selected from the group including polyethylenimine, polyamine (primary or secondary), polyallylamine, functional thioether, polyols, epichlorohydrin polyamides (PAE), and polyamine amides (AAP).

12. Method according to any of claims 1 to 11, ***characterized* in that** the (co)polymer base contains in addition at least one polyfunctional compound containing at least 3 heteroatoms selected from N, S, O, P and with each at least one mobile hydrogen.

13. Method according to any of claims 1 to 12, ***characterized* in that** in step a), the pH is adjusted to between 5.5 and 12.

14. Use of the aqueous polymer solution likely to be obtained by any of claims 1 to 13, as a flocculant, retention and/or drainage agent, and dry strength resistance in paper manufacturing processes.
